# EUROPEAN PATENT APPLICATION

(11) **EP 1 614 643 A1**
(43) Date of publication of application: **11.01.2006**
(21) Application number: 05254301.4
(22) Date of filing: 08.07.2005
(51) Int. Cl.: B65G 1/04, G01N 35/04, B01L 9/06

(54) **Automated store**

(30) Priority: 08.07.2004 GB 0415307
(71) Applicant: RTS Thurnall PLC, Irlam, Manchester M44 5AY (GB)
(72) Inventor: Craven, James Norman, Abbotsley, Cambridgeshire PE19 6UD (GB)
(74) Representative: Wilson Gunn

(57) **Abstract**

An automated store for the automated storage and retrieval of receptacles 7. The store includes at least one pair of substantially parallel, spaced apart rows of racking 6 for receiving receptacles, the rows defining an aisle 8 therebetween, and robotic apparatus 9 arranged to move in the aisle operative to introduce receptacles into and retrieve receptacles from the racking, wherein at least one row of racking is of greater width than the aisle. At least one row of racking may be of sufficient width to accommodate at least two receptacles one behind the other. The robotic apparatus may operate to slide receptacles in and out of the racking, and the receptacles may be engageable so that two engaged receptacles may be pulled out of the racking together, The receptacles may be trays for storing microtube racks.

## Description

The present invention relates to an automated store and to a method of operation of the store. The invention relates particularly, although not exclusively, to an automated store for the storage and retrieval of compounds. The invention also relates to a storage receptacle for use in an automated store.

Drug discovery involves the preparation and storage of large numbers of compounds. These compounds are typically stored in microtubes. The microtubes are stored in microtube racks and these racks are stored in automated refrigerated stores. Robotic apparatus in the stores is employed to automatically introduce into and remove from the refrigerated store racks of microtubes, and possibly individual microtubes.

In conventional stores pairs of parallel, spaced apart, rows of racking are provided. Each pair of rows defines an aisle therebetween, along which robot apparatus travels to introduce or remove microtube racks into or from the racking. The width of the aisle is equivalent to the width of each row of racking so that a receptacle the full width of a row of racking can be accommodated in the aisle. With this arrangement at least a third of the floor area of the store is occupied by aisles.

It is an object of the present invention to improve the storage density afforded by an automated store.

According to a first aspect of the present invention there is provided an automated store for the automated storage and retrieval of receptacles, the store comprising at least one pair of substantially parallel, spaced apart rows of racking for receiving receptacles, the rows defining an aisle therebetween, and robotic apparatus arranged to move in the aisle operative to introduce receptacles into and retrieve receptacles from the racking, wherein at least one row of racking is of greater width than the aisle.

With this arrangement a greater proportion of floor area is available for storage. It will be apparent from discussion of preferred features of the invention below how the full width of racking that is wider than its associate aisle can be utilised.

In one embodiment the store comprises a plurality of receptacles housed in the racking, The receptacles may be trays and may be configured to receive microtube racks. Each receptacle is dimensioned so that it may be moved along the aisle between rows of racking and so that, depending upon the width of the racking, at least two receptacles may be placed across the width of racking that is at least twice as wide as the receptacle. Then at least two receptacles, each individually movable within the aisle, can be stored at the same level in a single row of racking. The racking may have multiple levels. In one dimension at least the receptacles are preferably of greater size than half the width of the aisle.

With this embodiment the robotic apparatus is arranged to enable receptacles to be introduced into the racking, so that they are disposed one behind the other across the width of the racking in a direction extending away from the aisle, and retrieved from any position in the racking in which they are introduced, including from positions remote from the aisle. To facilitate this, the robotic apparatus may include means for storing one or more receptacles.

In one arrangement the racking comprises supports onto which the receptacles may be slid, or other support means with which the receptacles may be slideably engaged, and the robotic apparatus is arranged to push receptacles into and pull receptacles from the racking. The robotic apparatus may comprise an electromagnet or releasable gripper or hook to enable it to pull receptacles from the racking.

The receptacle may include releasable engagement means to enable one receptacle to become engaged with another so that if one receptacle is pulled from the racking an engaged receptacle will be pulled with it. The engagement means may comprise engageable formations. Two types of tray may be provided, equipped with respective engageable formations. Alternatively, each receptacle may comprise mutually engageable formations disposed at opposite sides respectively of the receptacle to enable receptacles to be engaged with each other side to side. The formations may be configured such that receptacles may be engaged and disengaged by relative movement in a direction substantially perpendicular to the direction in which they are introduced into or removed from the racks.

The robotic apparatus may comprise means to enable an item stored in a receptacle to be removed from one receptacle and introduced into anther, for example a microtube or microtube rack. This enables chosen microtubes or microtube racks to be placed into a single receptacle for removal from the store.

The automated store is preferably self-contained. Means are preferably provided to enable individual receptacles, or items stored therein, to be introduced into or removed from the store. In one embodiment this means comprises an opening enabling access to part of the racking, preferably towards the opposite side of the racking to the aisle. The means may comprise an airlock.

According to a second aspect of the present invention there is provided a receptacle for use in an automated store, the receptacle being arranged to slide in and out of a rack and comprising releasable engagement means arranged to enable it to be releasably engaged with another receptacle to enable two or more engaged receptacles to be slid in and out of a rack together by moving one of two engaged receptacles.

Preferably the releasable engagement means comprises mutually engageable formations formed on respective receptacles and/or on opposite sides of a single receptacle to enable receptacles to be engaged together side by side. The formations are preferably arranged so that the receptacles may be engaged and disengaged by moving them relative to one another in one direction, and so that when two receptacles have been engaged together by relative movement in a first direction they cannot be moved apart in a direction substantially perpendicular to the first direction,

The formations may comprise L-shaped projections and/or may comprise male and female engageable formations.

The receptacle may be a tray, which may be arranged to receive one or more microtube racks. Alternatively the receptacle may be a microtube rack.

According to a third aspect of the present invention there is provided a method of introducing two or more receptacles into a rack of an automated store according to the first aspect of the invention so that the at least two receptacles lie side by side across the width of the rack comprising the steps of introducing a first receptacle into the rack by sliding the receptacle into the rack, moving a second receptacle in the aisle so that it is adjacent the first receptacle and sliding the second rack towards the first receptacle thereby to slide the second receptacle into the rack such that the second receptacle pushes the first receptacle further into the rack.

The method preferably comprises the step of engaging the first and second receptacles.

According to a fourth aspect of the present invention there is provided a method of removing two or more receptacles from a rack of an automated store according to the first aspect of the invention, the receptacles lying side by side across the width of the rack, comprising the steps of sliding a first receptacle out of the rack by pulling the receptacle, moving the first receptacle within the aisle to enable the second receptacle to be slid out of the rack and sliding the second receptacle out of the rack.

The receptacles are preferably engaged together so that as the first receptacle is pulled from the rack the second receptacle is moved in the rack together with the first. The method then preferably also includes the step of disengaging the two racks, and this may be comprised in the step of moving the first rack within the aisle.

Embodiments of the present invention provide for more compact automated stores than hitherto and for compact self-contained stores, which may be modular in design.

In order that the invention may be more clearly understood an embodiment thereof will now be described by way of example with reference to the accompanying drawings of which:
- **Figure 1**: is a schematic perspective view of an automated store;

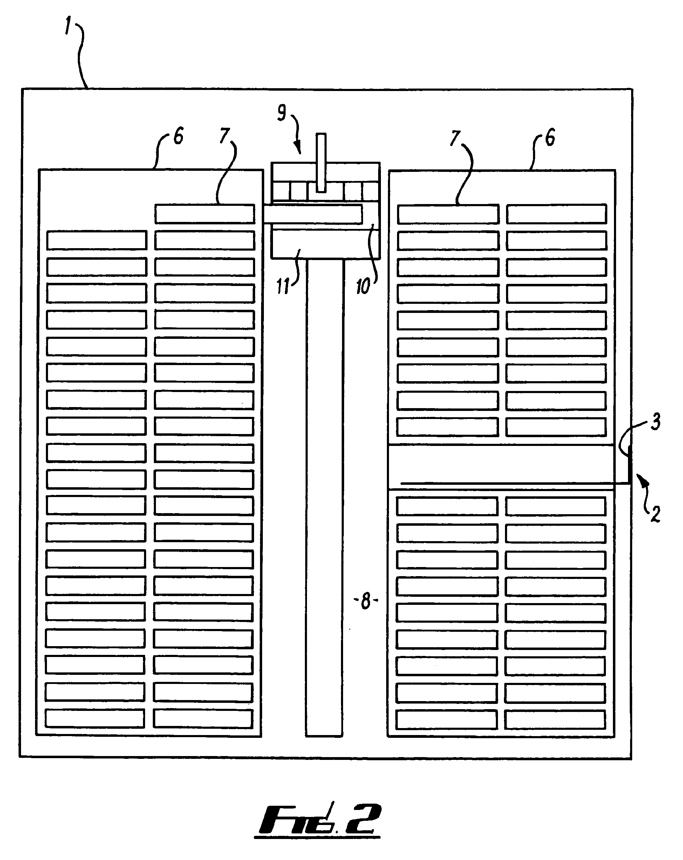

- **Figure 2**: is a schematic cross-sectional view of the store of Figure 1 taken along line II-II of Figure 1;
- **Figure 3**: is a perspective view of a tray of the store of Figure 1;

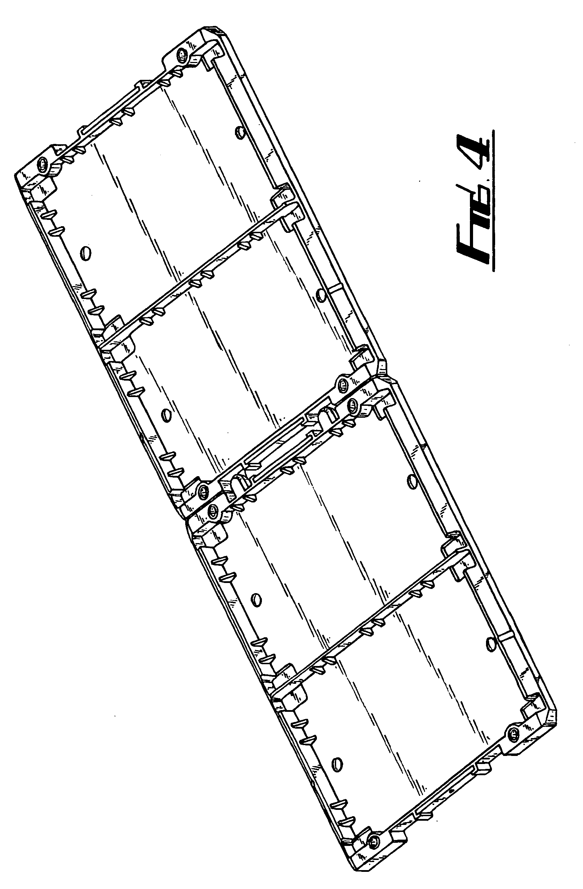

- **Figure 4**: shows two trays, one of the type shown in Figure 3, engaged together; and

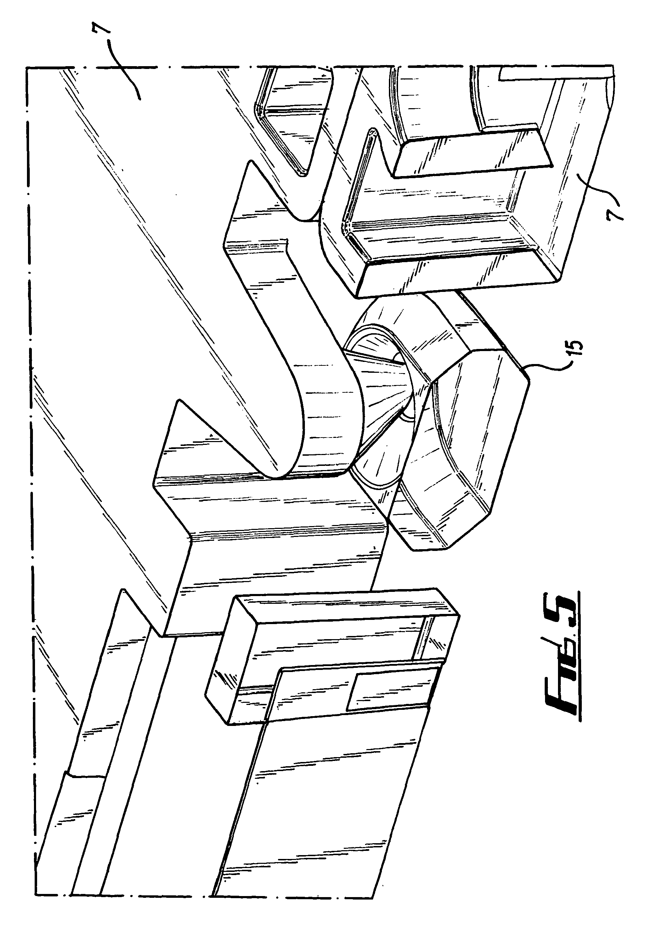

- **Figure 5**: shows enlarged detail of the engageable formations of the two trays of Figure 4.

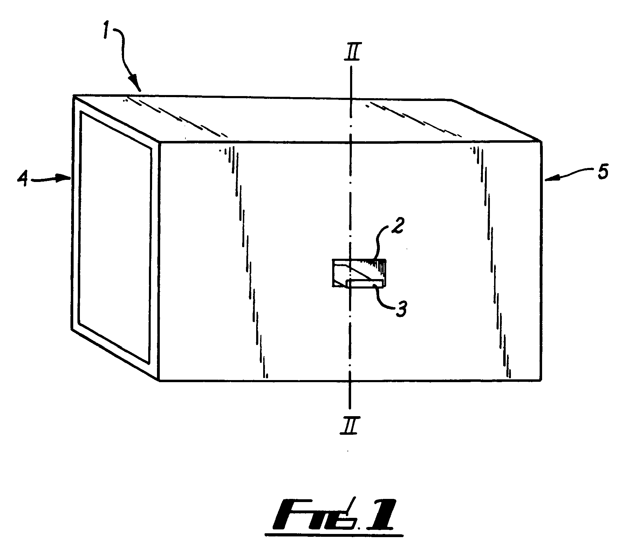

Referring to the drawings, Figure 1 illustrates a self-contained, modular, automated store for storage of compounds in microtubes. The store comprises a housing 1, the interior of which is refrigerated. The housing includes an opening 2 housing a sliding drawer arrangement 3 operative to close the opening 2 and enable compounds to be introduced into and removed from the store. Provision to open opposite ends 4, 5 of store is made to enable the store to be connected to further similar stores to expand the amount of storage available.

The store houses two substantially parallel, spaced apart rows of racking 6 for supporting trays 7, Between the rows of racking 6 there is an aisle 8. Robotic apparatus 9 for insertion and removal of trays 7 from the racking 6 is disposed for movement within the aisle. The racking 6 enables trays 7 to be stored in rows one above the other. The robotic apparatus 9 comprises an electromagnet movable widthwise within the store and operative to pull trays 7 out of the racking 6 and push trays 7 into the racking 6. The robotic apparatus further comprises means 10, 11 for storing to trays 7. The robotic apparatus 9 is movable heightwise within the store to enable it to manipulate trays 7 on all levels within the racking 6 and also lengthwise in the store between respective ends 4, 5 of the store.

The width of the aisle 8 and robotic apparatus is sufficient to accommodate a single tray 7, with appropriate clearances. The width of each row of racking 6 is sufficiently wide to accommodate two engaged trays 7 side by side across the width of the racking 6, again with adequate clearance.

The row of racking 6 towards the side of the store in which opening 2 is formed accommodates the sliding drawer 3 within an airlock (not shown) to enable trays 7 to be introduced into and removed from the store by opening the drawer 3 without significantly affecting the temperature within the store.

The trays 7 are moulded from a plastics material. They are substantially rectangular in shape and comprise a divider 12 dividing the tray into two compartments each configured to receive a standard microtube racks. Microtube racks are well known in the art and need not be described further.

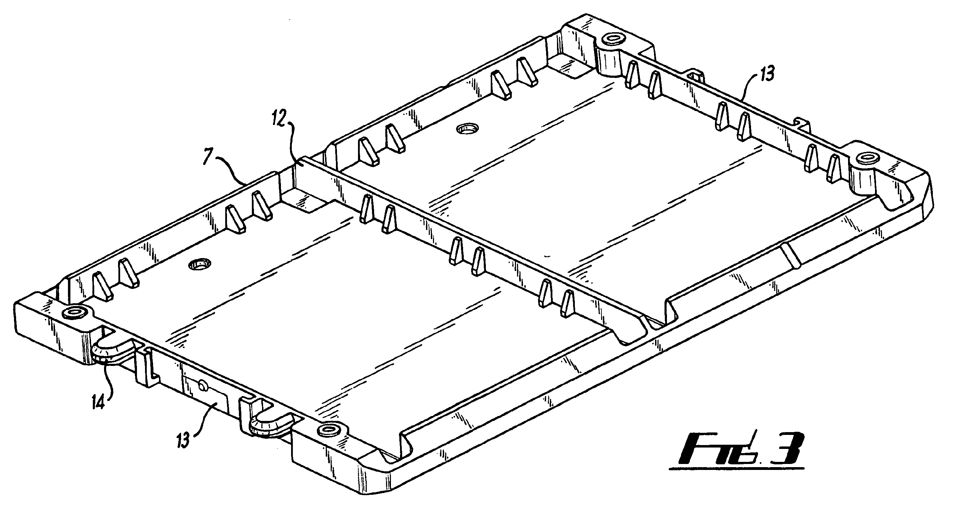

Steel, or other ferrous metal, plates 13 are mounted approximately in the centre of two opposite ends of the tray. This enables the tray to be pulled by the robotic apparatus 9 by way of the electromagnet forming part of that apparatus. At one end of the tray 7 engageable formations are disposed at opposite sides of the steel plate 13. There are two types of tray. The first type, illustrated in Figure 3, comprises male engageable formations 14 and the second type comprises female engageable formations 15. The male formations 14 comprise projections extending from the tray with (in the configuration illustrated) downwardly projecting tapering formations extending therefrom. The female engageable formations comprise projections extending from the tray with an upwardly (in the orientation illustrated) opening tapered aperture for receiving the downwardly projecting portion of the male engageable formations 14. Two trays 7 may be engaged with each other in the store by moving the two trays towards each other in a heightwise direction within the store such that the projections of the male formations of a first type of tray engage with the apertures of corresponding female formations on the second type of tray. Because the male and female formations are tapered to fit each other they have a self-centering action. When two trays have been engaged in this manner they will slide together within the rack of the store.

Each tray could be provided with engageable formations of male and female types, disposed at opposite ends of the tray respectively. Other types of engageable formation are, of course, possible.

In use, when it is desired to introduce compounds into the store, the robotic apparatus 9 removes a tray from the racking in the store and transfers it to the drawer 3. The drawer 3 opens enabling a user to place a populated microtube rack into the tray. The drawer is then closed enabling the robotic apparatus 9 to retrieve the tray together with microtube rack and place it into an appropriate place within the racking in the store.

Where a tray 7 is located in the racking adjacent to the aisle the tray 7 is retrieved by the robotic apparatus using its electromagnet to pull the tray into a storage area 10,11 of the robotic apparatus. As the tray 7 is engaged with a second tray located remote from the aisle 8, when the tray is drawn into the robotic apparatus 9 the second tray is pulled, by virtue of engagement with the first tray, to a position in the rack originally occupied by the first tray. When this position is reached the robotic apparatus lowers the first tray within the aisle disengaging the first and second trays. The first tray is then moved further into its storage area within the robotic apparatus enabling it to move up and down within the store without engaging the second tray, or any other trays adjacent to the aisle 8. The second tray may now, if desired, be retrieved by the robotic apparatus employing its electromagnet to drag the second tray into the remaining available storage area of the robotic apparatus, Either the first or second tray may now be delivered to another position in the racking or to the drawer 3 to enable a user to access the contents of the tray,

To return a tray 7 from the robotic apparatus 9 to the racking 6 the robotic apparatus aligns with an available space in the racking 6 and the tray 7 is pushed from the storage area 10, 11 of the robotic apparatus 9 into the racking. Where a tray 7 occupies the racking 6 adjacent to the aisle 8, but there is space behind this tray 7 for a further tray 7, a tray 7 held by the robotic apparatus 9 is moved to a position just below the level it is to be introduced into the racking 6 and moved towards the racking 6. The apparatus subsequently moves upwards engaging the tray 7 in the robotic apparatus 9 with the tray 7 in the racking 6 adjacent to the aisle 8. The robotic apparatus 9 then pushes the tray it is holding into the racking 6 causing the tray 7 already in the racking 6 to be moved to the available space in the racking so that the tray 7 being displaced from the robotic apparatus 9 occupies the original occupied space within the racking 6.

Storage density could be further increased by increasing the width of each row of racking and number of trays stored in each row. To enable each tray in a row to be accessed the capacity of the robotic apparatus to store trays is preferably increased to enable it to store the number of trays that may be accommodated on a single row of the racking. Alternatively, if one or more empty rows are provided in the racking trays removed from a row in the racking to enable a tray located in the racking remote from the aisle to be retrieved may be temporarily stored in the empty rows.

The increased storage density available makes it feasible to construct a viable self-contained store which may be combined in a modular fashion with similar self-contained stores to provide a desired storage requirement. This arrangement is particularly convenient for providing storage within laboratories as compared to large existing bespoke automated stores.

The above embodiment is described by way of example and many variations are possible without departing from the invention.

## Claims

1. An automated store for the automated storage and retrieval of receptacles, the store comprising at least one pair of substantially parallel, spaced apart rows of racking for receiving receptacles, the rows defining an aisle therebetween, and robotic apparatus arranged to move in the aisle operative to introduce receptacles into and retrieve receptacles from the racking, wherein at least one row of racking is of greater width than the aisle.

2. An automated store as claimed in claim 1 comprising a plurality of receptacles housed in the racking, each receptacle being dimensioned so that it may be moved along the aisle between rows of racking.

3. An automated store as claimed in claim 2 wherein, in one dimension at least, the receptacles are of greater size than half the width of the aisle.

4. An automated store as claimed in claim 2 or 3 wherein at least one row of racking is of sufficient width such that two receptacles may be placed one behind the other across the width of the racking.

5. An automated store as claimed in any of claims 2 to 4 wherein the receptacles are trays configured to receive microtube racks.

6. An automated store as claimed in any preceding claim wherein the robotic apparatus is arranged to enable receptacles to be introduced into the racking, so that they are disposed one behind the other across the width of the racking in a direction extending away from the aisle, and to be retrieved from any position in the racking in which they are introduced, including from positions remote from the aisle,

7. An automated store as claimed in any preceding claim wherein the robotic apparatus includes means for storing one or more receptacles.

8. An automated store as claimed in any preceding claim wherein the racking comprises supports onto which the receptacles may be slid, or other supports means with which the receptacles may be slideably engaged, and the robotic apparatus is arranged to push receptacles into and pull receptacles from the racking.

9. Apparatus as claimed in claim 8 wherein the robotic apparatus comprises an electromagnet or releasable gripper or hook to enable it to pull receptacles from the racking.

10. Apparatus as claimed in claim 2 or any of claims 3 to 9 when dependent, directly or indirectly on claim 2, wherein each receptacle includes releasable engagement means to enable one receptacle to be engaged with another so that if one receptacle is pulled from the racking an engaged receptacle will be pulled with it.

11. Apparatus as claimed in claim 10 wherein the releasable engagement means comprises mutually engageable formations.

12. Apparatus as claimed in claim 10 or 11 wherein two types of receptacle are provided, equipped with respective mutually engageable formations.

13. Apparatus as claimed in claim 11 or 12 wherein the formations are configured such that receptacles may be engaged and disengaged by relative movement in a direction substantially perpendicular to the direction in which they are introduced into or removed from the racks.

14. An automated store as claimed in any preceding claim wherein the robotic apparatus comprises means to enable an item stored in a receptacle to be removed from one receptacle and introduced into another receptacle.

15. An automated store as claimed in any preceding claim wherein the automated store is self-contained.

16. An automated store as claimed in claim 15, the store comprising a housing and means are provided to enable individual receptacles, or items stored therein, to be introduced into or removed from the store said means comprising an opening in the housing.

17. An automated store as claimed in claim 16 wherein the opening in the housing is formed by an airlock.

18. A method of introducing two or more receptacles into a rack of an automated store according to any preceding claim so that the at least two receptacles lie side by side across the width of the rack, the method comprising the steps of introducing a first receptacle into the rack by sliding the receptacle into the rack, moving a second receptacle in the aisle so that it is adjacent the first receptacle and sliding the second rack towards the first receptacle thereby to slide the second receptacle into the rack such that the second receptacle pushes the first receptacle further into the rack.

19. A method as claimed in claim 18 further comprising the step of engaging the first and second receptacles.

20. A method of removing two or more receptacles from a rack of an automated store according to any of claims 1 to 17, the receptacles lying side by side across the width of the rack, comprising the steps of sliding a first receptacle out of the rack by pulling the receptacle, moving the first receptacle within the aisle to enable the second receptacle to be slid out of the rack and sliding the second receptacle out of the rack.

21. A method as claimed in claim 20 wherein the receptacles are engaged together so that as the first receptacle is pulled from the rack the second receptacle is moved in the rack together with the first, and further comprising the step of disengaging the two racks.

22. A receptacle for use in an automated store, the receptacle being arranged to slide in and out of a rack and comprising releasable engagement means arranged to enable it to be releasably engaged with another receptacle to enable two or more engaged receptacles to be slid in and out of a rack together by moving one of two engaged receptacles.

23. A receptacle as claimed in claim 22 wherein the releasable engagement means comprises mutually engageable formations formed on respective receptacles and/or on opposite sides of a single receptacle to enable receptacles to be engaged together side by side.

24. A receptacle as claimed in claim 23 wherein the formations are arranged so that the receptacles may be engaged and disengaged by moving them relative to one another in one direction, and so that when two receptacles have been engaged together by relative movement in a first direction they cannot be moved apart in a direction substantially perpendicular to the first direction.

25. A receptacle as claimed in either claim 23 or 24 wherein the formations comprise L-shaped projections and/or may comprise male and female engageable formations.

26. A receptacle as claimed in any of claims 22 to 25 wherein the receptacle is a tray, arranged to receive one or more microtube racks.

27. A receptacle as claimed in any of claims 22 to 25 wherein the receptacle is a microtube rack.
